# EUROPEAN PATENT APPLICATION

(11) **EP 2 621 062 A1**
(43) Date of publication of application: **31.07.2013**
(21) Application number: 12152712.1
(22) Date of filing: 26.01.2012
(51) Int. Cl.: H02K 3/50

(54) **Connecting device**

(71) Applicant: Siemens Aktiengesellschaft, 80333 München (DE)
(72) Inventor: Kimiabeigi, Mohammad, Sheffield, S6 1SE (GB); Thomas, Arwyn, Brithdir, SY22 5HF (GB)

(57) **Abstract**

It is described a connecting device for a stator segment for a stator of an electrical machine, in particular a generator, for electrically interconnecting end sections of two interrelated parts of a coil, wherein each part is accommodated in a recess of a body of the stator segment and wherein the end sections project outwardly from the body of the stator segment. The connecting device comprises an interconnecting channel being adapted to electrically interconnect end sections of the two interrelated parts of the coil in such a manner that a closed circuit is provided for the coil, and terminal means, wherein the terminal means are formed to connect the end sections of the two interrelated parts of the coil to the interconnecting channel. Further a stator segment, a stator, a generator and a corresponding method for interconnecting end sections are described.

## Description

### Field of invention

The present invention relates to a connecting device for a stator segment for a stator of an electrical machine, in particular a generator, for electrically interconnecting end sections of two interrelated parts of a coil. Further, the present invention relates to a stator segment comprising such a connecting device. Furthermore, the present invention relates to a stator comprising the stator segment. Moreover, the present invention relates to a generator comprising the stator, for instance for a wind turbine. Beyond this, the present invention relates to a method for electrically interconnecting end sections of two interrelated parts of a coil.

### Art Background

An electrical machine, for example a generator, may consist of a rotor and a stator, the stator comprising one or more coils. The end of the coils, extending to the outside of the stator, for instance of a PM generator, are also called end coils.

The end windings, for instance of a multi-pole multi MW generator, utilize a considerable amount of active material, for example copper, to simply close the circuit of the currents within each phase, for instance in a three phase generator. This means that end sections of interrelated parts of a coil need to be connected or contacted to close the circuit. However, these end sections of the windings do not contribute to the torque production of the generator, and to add to their disadvantages, they may form a considerable portion of Joule loss which not only reduces the overall efficiency of the generator, but also is conventionally difficult to be cooled away as the coil ends, unlike the active part of the coils, are placed in air which has a poor thermal conductivity compared to stator laminations.

End windings can be shortened in length by changing the winding configuration and using fractional slot machines with non-over lapping windings. Furthermore, the end coils are conventionally cooled down using air cooling system and convection whose efficiency is rather poor and may result in local hot spots. An approach to cool the end coils was to fill the end coil regions with a medium with better thermal conductivity than air and then placing liquid cooling pipes in that medium. However, this method is expected to be rather tedious to implement for wind generators due to the limitation of space, while the thermal conductivity of the medium is practically low as it needs to have high electrical resistivity to avoid a short circuit between different phases in the end coil region.

Thus, there may be a need for an improved system for interconnecting the end sections of two interrelated parts of a coil.

### Summary of the Invention

This need may be met by the subject matter according to the independent claims. Advantageous embodiments of the present invention are described by the dependent claims.

According to an embodiment, a connecting device for a stator segment for a stator of an electrical machine, in particular a generator, for electrically interconnecting end sections of two interrelated parts of a coil, wherein each part is accommodated in a recess of a body of the stator segment and wherein the end sections project outwardly from the body of the stator segment, is provided. The connecting device comprises an interconnecting channel being adapted to electrically interconnect end sections of the two interrelated parts of the coil in such a manner that a closed circuit is provided for the coil, and terminal means, wherein the terminal means are formed to connect the end sections of the two interrelated parts of the coil to the interconnecting channel.

This embodiment is based on the idea that a connecting device may be used for interconnecting the end sections of two interrelated parts of a coil which is arranged in an analogue manner to a circuit board. This means that the end sections may be inserted, via the terminal means, to the connecting device in a similar manner as components would be inserted into a circuit board.

According to this embodiment, a simple and efficient method is introduced to electrically interconnect the end sections of two interrelated parts of a coil. The two interrelated parts of the coil form, after connecting the end sections, the complete coil with a closed current circuit. In common systems, the end sections would be connected via any kind of physical coupling, for instance using soldering or welding. By using a connecting device as described herein, a simple connecting mechanism may be achieved.

"End sections of two interrelated parts of a coil" in this context may denote that one coil, which is accommodated in recesses of the stator segment, may consist of two parts. Conventionally, each coil belonging to any phase is comprised of two sides which are located in the axially extended stator slots and are connected together outside forming the so-called end coils (via coupling the end sections). As the current through the windings inherently has opposite directions in the two sides of each coil, one side may be called Go side and the other Return side, meaning Go and Return of the current within the closed loop of the coil.

"Interconnecting channel" in this context may refer to any kind of conductor or conducting element being able to provide an electrical connection between the end sections. The interconnecting channels may also be in the form of conducting paths.

"Terminal means" in this context may denote for instance receiving means like slots or plugs or any other kind of element being able to connect with the end sections.

The herein described connecting device may be used for a stator of a generator of a wind turbine. It may also be used for any other kind of electrical machine, like a motor.

According to a further embodiment, the terminal means for connecting the end sections of the two interrelated parts of the coil are arranged adjacent to each other, and the interconnecting channel is adapted to electrically coupling the terminal means.

According to this embodiment, the terminal means for the two interrelated parts of the coil are arranged in direct neighbouring. Such an embodiment may be for instance used for stators, wherein the coils are not overlapping. The interconnecting channel may be arranged to couple the terminal means.

According to a further embodiment, the connecting device comprises a plurality of terminal means for connecting a plurality of end sections, wherein two respective terminal means are adapted to connect two respective end sections being associated with two interrelated parts of one coil.

The stator segment may comprise more than one coil. For electrically coupling the end sections of each coil, the connecting device may comprise more than two terminal means.

According to a further embodiment, the connecting device comprises a plurality of interconnecting channels, wherein each interconnecting channel is adapted to electrically interconnect two respective end sections being associated with two interrelated parts of one coil.

Each couple of terminal means, being associated with one coil, may be electrically coupled by an interconnecting channel. Such an interconnecting channel may be realized for instance in the form of a conducting layer, in an analogue manner to a circuit board.

According to a further embodiment, the connecting device further comprises at least one insulating layer for electrically insulating at least one of the plurality of interconnecting channels against the other interconnecting layers.

The interconnecting channels may be insulated against each other by using an insulating layer. Such an insulating layer may comprise for instance an electrically insulating, thermally conductive layer. Thus, the interconnecting channels are insulated and at the same time, heat may be dissipated.

According to a further embodiment, the plurality of interconnecting channels is arranged in overlaying layers, wherein each overlaying layer corresponds to one of the group of interconnecting channels.

According to this embodiment, the connecting device may be arranged in a sandwich-like manner. Conductive layers, representing the interconnecting channels, may be arranged over each other.

According to a further embodiment, each overlaying layer is associated with one electrical phase and wherein insulating layers are arranged between the overlaying layers.

Each overlaying layer may be realized by a conductive layer. To avoid a short circuit between coils of different phases, an insulating layer may be arranged between the overlaying layers.

According to a further embodiment, the terminal means project outwardly from the connecting device.

This may provide the advantage that the end sections of the two interrelated parts of the coil may be easily inserted or plugged into the terminal means.

In another embodiment, a connector may be used between the end sections and the terminal means for coupling the end sections to the terminal means.

According to a further embodiment, the terminal means are formed to connect the end sections via a clamping mechanism.

A clamping mechanism may provide a simple coupling mechanism as no further means might be needed to couple the end sections to the connecting device.

According to a further embodiment, the terminal means are crimp connectors.

Crimp connectors may be realized in a very simple way. The end sections may be inserted or pushed into the terminal means by applying a vertical force. After this, a horizontal force may be applied to the crimp connectors and the end sections may be secured in the crimp connectors by a crimping mechanism. The forces may be applied by using any crimping tool.

According to a further embodiment, a stator segment for a stator of an electrical machine, in particular a generator, is provided, wherein the stator segment comprises two interrelated parts of a coil, wherein each part is accommodated in a recess of a body of the stator segment and wherein the end sections project outwardly from the body of the stator segment. The stator segment comprises a connecting device for electrically interconnecting the end sections of the two interrelated parts of the coil, the connecting device having the above mentioned features.

The connecting device may be arranged at an axial end of the stator segment. The stator segment may also comprise a connecting device as described herein at both axial ends. In such a case, one of the connecting devices may further comprise terminals for connecting the coil of the stator segment to a control device of the generator/electrical machine or any circuitry of the generator/electrical machine.

The stator segment may also comprise more than coil. For instance, the stator segment may comprise three coils of different phases. It is also possible that the stator segment comprises more than one coil for each phase. In such a case, the connecting device may comprise insulation means (for instance layers) to insulate coils of the same phase against each other.

According to a further embodiment, a stator of an electrical machine, in particular a generator, is provided. The stator comprises at least one stator segment with a connecting device having the above mentioned features.

The stator may comprise more than one stator segment. Each stator segment may comprise one connecting device. It is also possible that a plurality of stator segments shares one connecting device. In this case, the connecting device may consist of a plurality of sections, each sections being assigned to one stator segment and being insulated, for instance by using an insulating layer as described above for insulating the sections of the connecting device against each other.

According to a further embodiment, a generator, in particular for a wind turbine, is provided. The generator comprises a rotor and a stator as described above.

Such a generator may be any kind of generator being known in the art. The rotor and the stator may be arranged in a common way, wherein the stator may comprise stator segments with connecting devices according to embodiments as described herein.

It should be understood that features (individually or in any combination) disclosed, described, used for or mentioned in respect to the description of an embodiment of a connecting device, a stator segment, a stator or a generator may also be (individually or in any combination) applied, used for, or employed for a method for electrically interconnecting end sections of two interrelated parts of a coil.

According to a further embodiment, a method for electrically interconnecting end sections of two interrelated parts of a coil via a connecting device for a stator segment for a stator of an electrical machine, in particular a generator, is provided, wherein each part is accommodated in a recess of a body of the stator segment and wherein the end sections project outwardly from the body of the stator segment. The method comprises connecting the end sections of the two interrelated parts of the coil via terminal means to an interconnecting channel, and electrically interconnecting, via the interconnecting channel, the end sections of the two interrelated parts of the coil in such a manner that a closed circuit is provided for the coil.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 illustrates a connecting device and a stator segment according to an embodiment;
Fig. 2 illustrates a connecting device and a stator segment according to a further embodiment;
Fig. 3 illustrates a connecting device according to a further embodiment;
Fig. 4 illustrates a connecting device and a stator segment according to a further embodiment;
Fig. 5 illustrates a connection of the end sections to the connecting device according to an embodiment;
Fig. 6 illustrates a crimping mechanism of the end sections and the terminal means according to an embodiment.

### Detailed Description

The illustration in the drawings is in schematic form. It is noted that in different figures, similar or identical elements are provided with the same reference signs.

As already explained, the end windings of a multi-pole generator utilize a considerable amount of active material, for instance copper, to close the circuit of the currents within each phase, such as in a three phase generator. However, these parts of the windings do not contribute to the torque production of the generator, and to add to their disadvantages, they form a considerable portion of Joule loss which not only reduces the overall efficiency of the generator, but also is conventionally difficult to be cooled away as the coil ends, unlike the active part of the coils, are placed in air which has a poor thermal conductivity compared to stator laminations. End windings can be shortened in length by changing the winding configuration and using fractional slot machines with non-over lapping windings. Furthermore, the end coils are conventionally cooled down using air cooling system and convection whose efficiency is rather poor and may result in local hot spots.

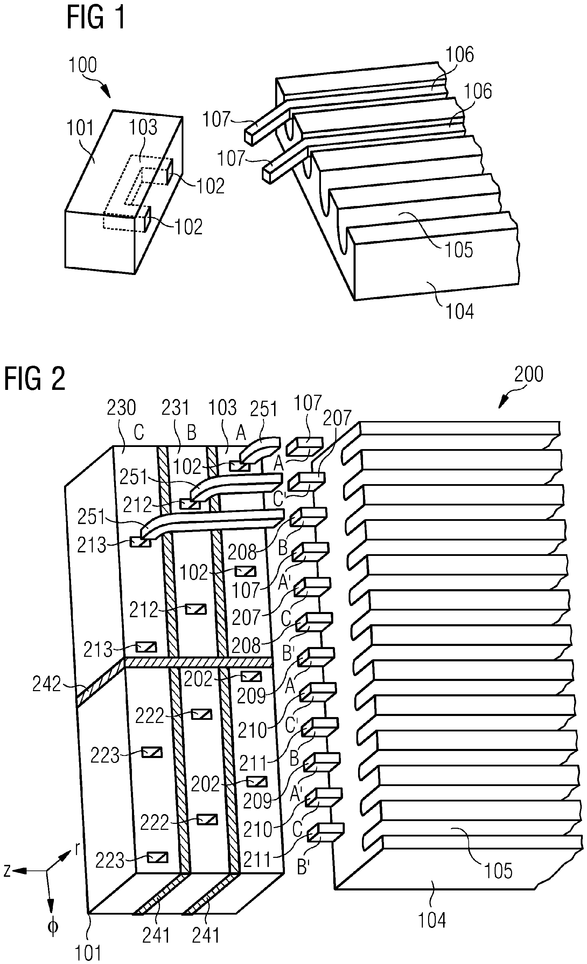

To provide a simple and efficient way to connect the end coils, a connecting device as shown in Figure 1 may be used. In Figure 1, a connection system 100 is shown, wherein a connecting device 101 is used for electrically interconnecting end sections 107 of two interrelated parts 106 of a coil. Each part 106 is accommodated in a recess 105 of a body 104 of a stator segment. The end sections 107 project outwardly from the body 104 of the stator segment. The connecting device 101 comprises an interconnecting channel 103 and terminal means 102. The herein described connecting device is based on the idea to use a circuit board to connect the end coils in an analogical method to the approach as used in electronic board circuits.

The end sections 107 may be inserted or otherwise coupled with the terminal means 102. The interconnecting channel 103 is formed inside the connecting device and is adapted to electrically interconnect the end sections of the two interrelated parts of the coil in such a manner that a closed circuit is provided for the coil. The connecting device may also comprise more than one interconnecting channel and more than two terminal means as will be described below.

In the following, examples of further embodiments of the connecting device will be described.

Figure 2 shows a proposed arrangement 200 of the connecting device 101 in the form of a circuit board for a three phase over-lapping winding generator. Each end side of the conventional coils (not shown) are being called conductor bar or end section 107, 207, 208, 209, 210, 211 which can be composed of parallel or serially connected sub- conductors. The parallel or series connection takes meaning in the way the sub-conductors are being connected to other sub-conductors belonging to another conductor bar. The end of the conductive bars is connected to the interconnecting channels 103, 231, 230 on the circuit board, for instance via connective modules 251. The interconnecting channel 103 is associated with phase A and the conductor bars 107, 209. The interconnecting channel 231 is associated with phase C and the conductor bars 207, 210. The interconnecting channel 230 is associated with phase B and the conductor bars 208, 211.

Either the connective modules or the conductive bars may have three different lengths for the proposed type of circuit board, as illustrated in Figure 2. By using different lengths, the conductor bars/end sections of the coils being associated with one phase can be easily connected to the interconnecting channel being associated with the same phase. The connecting device comprises terminal means 102, 202, 212, 222, 213, 223 for connecting the end sections or conductor bars, either directly or via connective modules, to the interconnecting channels. The terminal means are shown here as slots but may also have any other form.

The phases, or the interconnecting channels being associated with the phases, are insulated from one another using an insulation stretch, the vertical stretches numerated 241 in Figure 2. Similarly, each pair of Go and Return side of the conductor bars are insulated from one another via another sets of insulation stretches, horizontal stretches numerated 242. By this, the coils being associated with the same phase may be insulated from each other. The electrical insulation may be used to insulate between different phases and/or non-series conductor bars. Two identical circuit boards or connecting devices may be used in the two axial ends of the stator segment to close the conductor circuits in the two ends.

The interconnecting channels 103, 231, 230 may be used for the connection of end coils. In case of 1 turn winding composed of parallel conductors the channels are simply a connection area between the end bars and intermediate region, which is metallic/electrically conductive. In case of multi-turn winding configuration/serially connected sub-conductors, the channels can be composed of several sub-channels, each of which is insulated from the neighboring sub-channels via an intermediate region (region between terminal means) which is now made of electrical insulation material. These intermediate regions between channels in case of 1-turn winding as well as between sub-channels in case of multi-turn winding configuration can be solid metallic such as copper or aluminium if 1-turn winding composed of parallel conductors is used. In case of multi-turn type of winding, these regions may be of electrical insulation material with high thermal conductivity for better cooling.

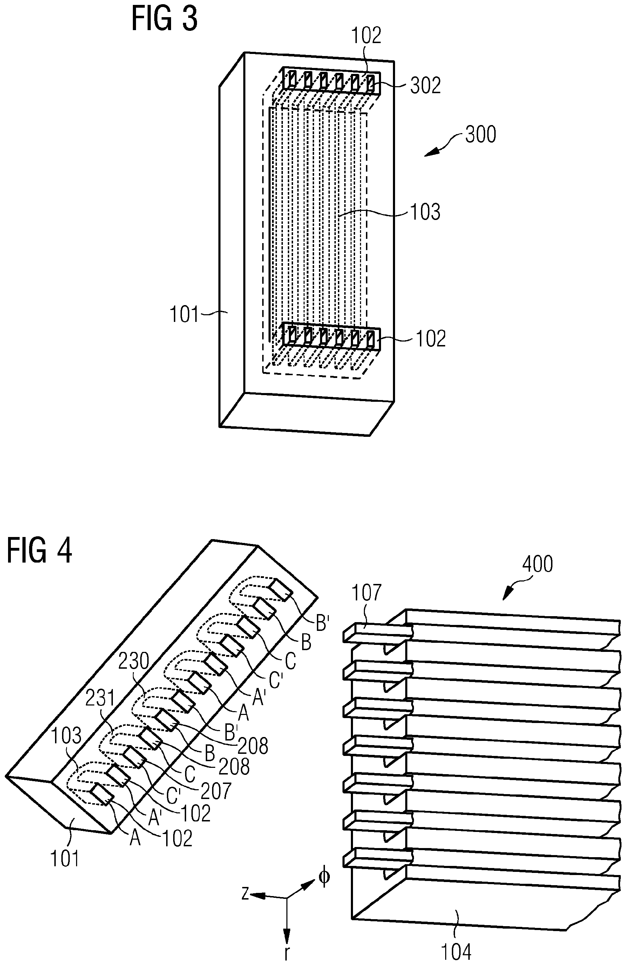

If the sub-conductors are connected in parallel or a solid 1-turn conductor concept is applied, apart from the insulation layers, the rest of the connecting device, i.e. the interconnecting layers 103, 231, 230 can be made of highly electrical and thermal conductive material such as copper or aluminium. However, in the case of series sub-conductors (that means that the sub-conductors of the Go conductive bar are intended to be serially connected to the other sub-conductors in the Return conductor bar via the connecting device) the connecting device be majorly made of electrically insulate material with a relatively high thermal conductivity to allow an efficient cooling transfer rate. An example of such an embodiment 300 is shown in Figure 3. Here, the end of the conductor bars are coupled to the electrically conductive channels 103 provided on the connecting device and extended for instance in depth and through the board to the neighboring channel to which the other conductor bar end shall be connected. Sub-channels 302 in the case of multi-turn winding configurations are shown, i.e., when each conductor bar is composed of several sub-conductor bars which shall be coupled to other sub-conductor bars located in the other (stator) slots, via a series connection provided by the connecting device. Note that the circuit boards are placed in two axial ends of the generator providing the connection for both ends of the conductor bars. Here, the sub-channels may be made inside the connecting device, in case of multi-turn winding configuration, which are metallic, i.e., electrically conductive such as copper or aluminium.

In case of non-overlapping winding such as concentrated winding topology is used for the generator, the connecting device can be made in a simpler way as that shown in Figure 2. Such an embodiment 400 is shown in Figure 4. In this case the connective modules may not be needed as the conductor bars or end sections 107 can be axially and directly pushed to the channels 103 via the terminal means 102, 207, 208 on the connecting device, as illustrated. As similar for overlapping winding, if parallel windings are applied, the device can be majorly made of electrically conductive material such as aluminium or copper while each pair of Go and Return channels belonging to each phase may be isolated from the neighboring pairs via an interiorly provided electrical insulation, not shown in Figure 4. Furthermore, in case of series sub-conductors, the connecting device can be majorly made of electrically insulate but thermally conductive material while the channels are electrically conductive and composed of isolated channels for each subconductor similar to Figure 3.

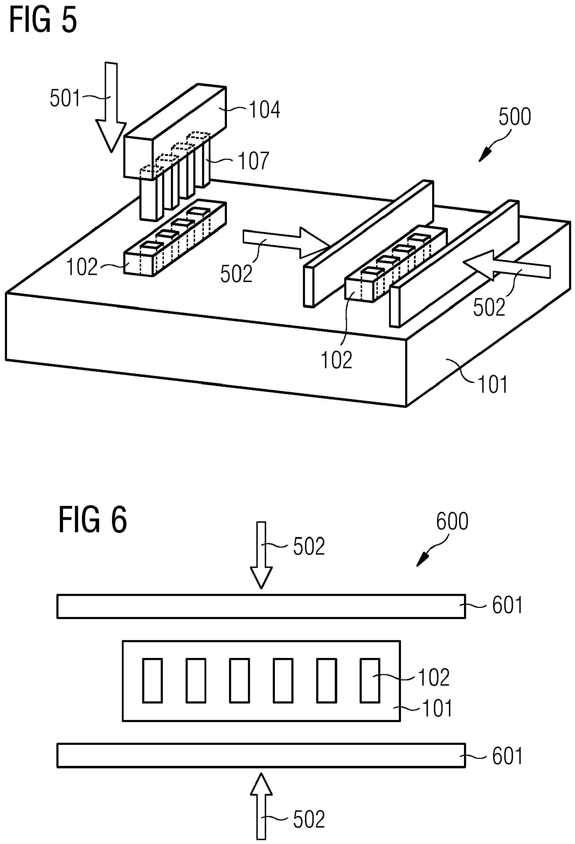

The connection of the end bars to the channels can be made via brazing or preferably crimping. i.e., a mechanical pressure. An example 500, 600 for a suitable crimping is illustrated in Figures 5 and 6, where the channels and terminal means 102 are extruded out of the connecting device to provide a space for horizontal crimping pressure on the longer sides of the terminal means when the end sections, for instance by connective modules which contain the sub-conductors, have been pushed through. Prior to the horizontal pressure 502, as illustrated, a vertical crimping pressure 501 may be applied to connect/push through the end sections 107 into the channels. As shown in Figure 6, a crimping tool 601 may apply the horizontal pressure for crimping.

According to the herein described embodiments, based on an implementable and rather simple technique, one of the biggest problems in permanent magnet machines regarding the end-winding vibration and cooling may be effectively solved. The idea of connecting the end of the conductors via the channels of a circuit board may be extended for any type of windings, overlapping as well as non-overlapping, while it can be applied for segmented stators in wind generators. Crimping may be used as a cheap and simple method of connection of the conductor bars to the circuit board. Based on the herein described connecting device, the end coils do not need to be shaped in complex conventional end coil shapes which are expensive and time consuming. So the manufacturing and mantling of the windings may be done faster and cheaper for a series production. Based on the idea, the end of the conductor bars might not be floating freely in the air, as for the conventional end coils, instead they may be mechanically fixed into the circuit board and this way their vibration may be transferred to the circuit board and greatly reduced.

It should be noted that the connect- modules, the materials and dimensions of the connecting device, the terminal means or the interconnecting channels can be chosen appropriately in such a way that the overall length of the end coil connections or alternatively the overall Joule loss in this region is reduced based on the proposed device. Thereby the overall efficiency is may be improved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A connecting device (101) for a stator segment for a stator of an electrical machine, in particular a generator, for electrically interconnecting end sections (107) of two interrelated parts (106) of a coil, wherein each part is accommodated in a recess (105) of a body (104) of the stator segment and wherein the end sections project outwardly from the body of the stator segment, the connecting device comprising
an interconnecting channel (103) being adapted to electrically interconnect end sections (107) of the two interrelated parts of the coil in such a manner that a closed circuit is provided for the coil, and
terminal means (102), wherein the terminal means are formed to connect the end sections of the two interrelated parts of the coil to the interconnecting channel.

2. The connecting device (101) as set forth in claim 1, wherein the terminal means (102) for connecting the end sections (107) of the two interrelated parts of the coil are arranged adjacent to each other, and wherein the interconnecting channel (103) is adapted to electrically coupling the terminal means.

3. The connecting device (101) as set forth in claim 1, the connecting device comprising a plurality of terminal means (102)for connecting a plurality of end sections (107), wherein two respective terminal means are adapted to connect two respective end sections being associated with two interrelated parts of one coil.

4. The connecting device (101) as set forth in claim 3, the connecting device comprising a plurality of interconnecting channels (103), wherein each interconnecting channel is adapted to electrically interconnect two respective end sections (107) being associated with two interrelated parts of one coil.

5. The connecting device (101) as set forth in any one of the claims 3 or 4, further comprising at least one insulating layer (241) for electrically insulating at least one of the plurality of interconnecting channels against the other interconnecting layers.

6. The connecting device (101) as set forth in any one of the preceding claims, wherein the plurality of interconnecting channels (103) is arranged in overlaying layers, wherein each overlaying layer corresponds to one of the group of interconnecting channels.

7. The connecting device (101) as set forth in claim 6, wherein each overlaying layer is associated with one electrical phase and wherein insulating layers (242) are arranged between the overlaying layers.

8. The connecting device (101) as set forth in any one of the preceding claims, wherein the terminal means (102) project outwardly from the connecting device.

9. The connecting device (101) as set forth in claim 8, wherein the terminal means (102) are formed to connect the end sections (107) via a clamping mechanism.

10. The connecting device (101) as set forth in claim 9, wherein the terminal means (102) are crimp connectors.

11. A stator segment for a stator of an electrical machine, in particular a generator, the stator segment comprising two interrelated parts of a coil, wherein each part is accommodated in a recess of a body of the stator segment and wherein the end sections project outwardly from the body of the stator segment, the stator segment comprising
a connecting device (101) as set forth in any one of the preceding claims for electrically interconnecting the end sections of the two interrelated parts of the coil.

12. A stator of an electrical machine, in particular a generator, the stator comprising at least one stator segment as set forth in claim 11.

13. A generator, in particular for a wind turbine, the generator comprising
a rotor and
a stator as set forth in claim 12.

14. Method for electrically interconnecting end sections of two interrelated parts of a coil via a connecting device for a stator segment for a stator of an electrical machine, in particular a generator, wherein each part is accommodated in a recess of a body of the stator segment and wherein the end sections project outwardly from the body of the stator segment, the method comprising
connecting the end sections of the two interrelated parts of the coil via terminal means to an interconnecting channel, and
electrically interconnecting, via the interconnecting channel, the end sections of the two interrelated parts of the coil in such a manner that a closed circuit is provided for the coil.
